# EUROPEAN PATENT SPECIFICATION

(11) **EP 4 343 115 B1**
(45) Date of publication and mention of the grant of the patent: **08.04.2026**
(21) Application number: 23198927.8
(22) Date of filing: 21.09.2023
(51) Int. Cl.: F01D 5/14

(54) **AIRFOIL FOR AN AIRCRAFT ENGINE COMPRISING A SLOT**
SCHAUFEL FÜR EIN TRIEBWERK MIT EINEM SCHLITZ
AUBE POUR MOTEUR D'AÉRONEF COMPORTANT UNE FENTE

(30) Priority: 21.09.2022 US 202217934043
(43) Date of publication of application: 27.03.2024
(73) Proprietor: PRATT & WHITNEY CANADA CORP., Longueuil, Québec J4G 1A1 (CA)
(72) Inventor: AKCAYOZ, Eray, (01BE5) Longueuil, J4G 1A1 (CA); CUNNINGHAM, Mark, (01BE5) Longueuil, J4G 1A1 (CA)
(74) Representative: Dehns

(56) References cited:
- CN-A- 111 102 012
- DE-B4- 102017 118 583
- US-A1- 2020 270 998
- US-B2- 6 715 983

## Description

### TECHNICAL FIELD

The disclosure relates generally to aircraft engines and, more particularly, to airfoils and struts used in such engines.

### BACKGROUND

Aerodynamic profiles of airfoils are optimized to maximize their efficiency and performance at design operating conditions. However, these same airfoils may present decreased performance when operated at off-design operating conditions. There is therefore a need to provide an airfoil that minimizes losses at off-design operating conditions.

US 6,715,983 B2 discloses a prior art method and apparatus for reducing distortion losses induced to a gas turbine engine airflow.

### SUMMARY

According to a first aspect of the present invention, there is provided an airfoil for an aircraft engine as set forth in claim 1.

According to a further aspect of the present invention, there is provided a turbine exhaust case as set forth in claim 2.

According to a further aspect of the present invention, there is provided a stator for a gas turbine engine as set forth in claim 3.

Further embodiments are provided as set forth in dependent claims 4 to 9.

### DESCRIPTION OF THE DRAWINGS

Reference is now made to the accompanying figures in which:
Fig. 1 is a schematic cross-sectional view of an aircraft engine depicted as a gas turbine engine;
Fig. 2 is a cross-sectional view of a turbine exhaust case of the gas turbine engine of Fig. 1; and
Fig. 3 is a cross-sectional view illustrating an airfoil of a strut of the turbine exhaust case of Fig. 1.

### DETAILED DESCRIPTION

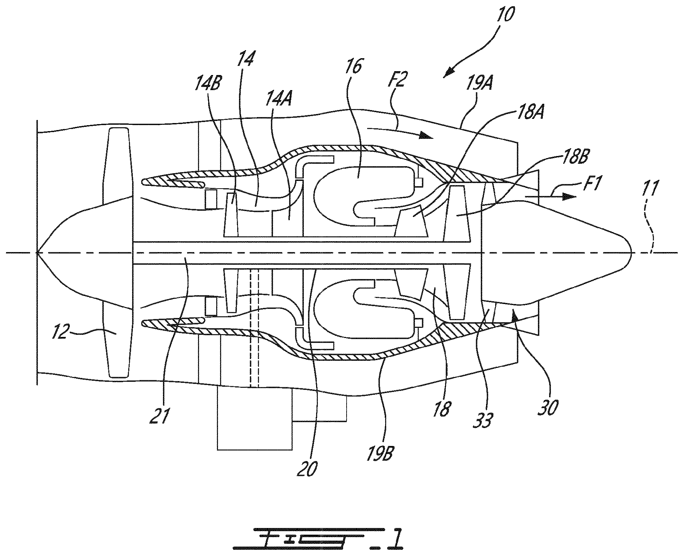

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12, the compressor section 14, and the turbine section 18 are rotatable about a central axis 11 of the gas turbine engine 10. In the embodiment shown, the gas turbine engine 10 comprises a high-pressure spool having a high-pressure shaft 20 drivingly engaging a high-pressure turbine 18A of the turbine section 18 to a high-pressure compressor 14A of the compressor section 14, and a low-pressure spool having a low-pressure shaft 21 drivingly engaging a low-pressure turbine 18B of the turbine section 18 to a low-pressure compressor 14B of the compressor section 14 and drivingly engaged to the fan 12. It will be understood that the contents of the present disclosure may be applicable to any suitable engines, such as turboprops and turboshafts engines.

The gas turbine engine 10 includes a turbine exhaust case 30 located at an exhaust of the gas turbine engine 10. The turbine exhaust case 30 is used to mix a core flow F1 that flows through the compressor section 14, combustor 16, and turbine section 18 with a bypass flow F2 that flows within a bypass duct 19 defined radially between an exterior case 19A and a core case 19B. The turbine exhaust case 30 defines part of the core case 19B. The turbine exhaust case 30 may define crests and valleys used to favor the mixing of those two flows.

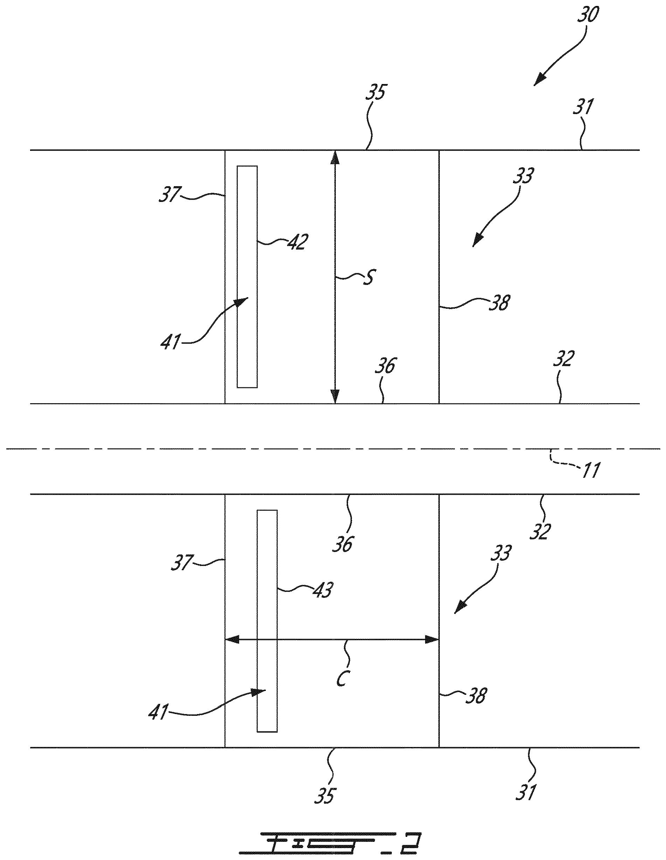

Referring now to Fig. 2, the turbine exhaust case 30 is described in more detail. The turbine exhaust case, TEC 30 herein after, includes an outer case 31 extending circumferentially around the central axis 11 and an inner case 32 extending circumferentially around the central axis 11. The outer case 31 is disposed around the inner case 32. The TEC 30 includes struts 33, which may be referred to as deswirling struts since they may be used to reduce a circumferential component of the core flow F1 before it is mixed with the bypass flow F2 (Fig. 1). Two struts 33 are shown in Fig. 2. It is however understood than more than two struts 33 are present and circumferentially distributed about the central axis 11.

One of the struts 33 is described below using the singular form, but it will be understood that the description may apply to all of the struts 33.

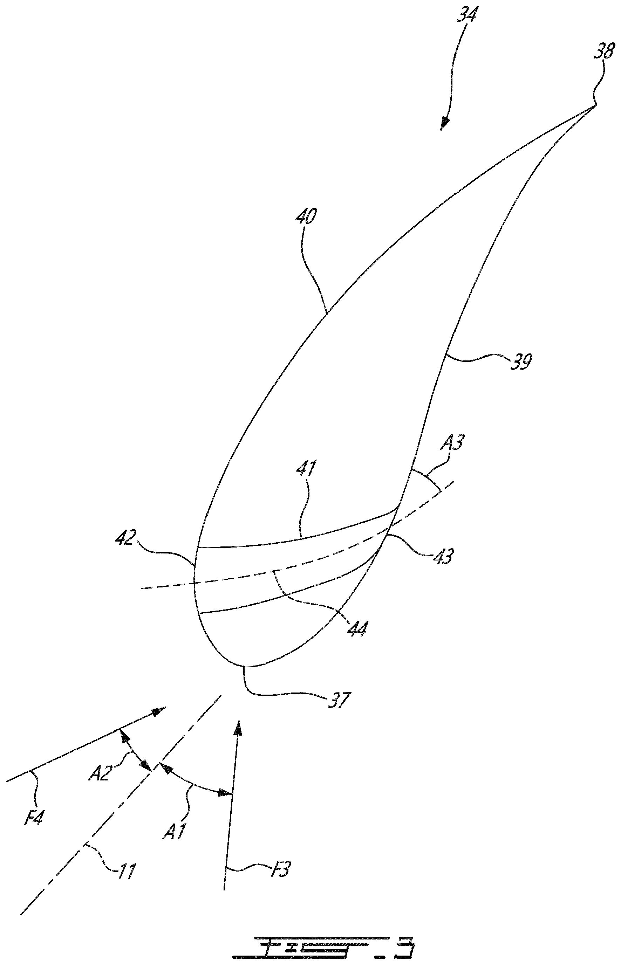

Referring to Figs. 2-3, the strut 33 includes an airfoil 34 that extends along a span S from an outer end 35 at the outer case 31 to an inner end 36 at the inner case 32. The airfoil 34 extends along a chord C from a leading edge 37 to a trailing edge 38. The airfoil 34 includes a pressure side 39 and a suction side 40 opposed to the pressure side 39. The pressure side 39 and the suction side 40 both extend along the span S from the outer end 35 to the inner end 36 and along the chord C from the leading edge 37 to the trailing edge 38. As shown in Fig. 3, the pressure side 39 is concave whereas the suction side 40 is convex. In other words, the airfoil 34 is a cambered airfoil.

The struts 33 are structural parts, but, as explained above, are also used to de-swirl turbine exit flow with minimal losses. A shape of the airfoils 34 is optimized to maximize de-swirl capability at design point (e.g., cruise). The optimized airfoil shape is highly dependent on the incoming swirl angle which may vary significantly between various design points. Therefore, a strut optimized for the design point may cause significant flow separation and losses at off-design point. This may cause significant reduction in the overall mission efficiency and may result in an inadequate exhaust performance if the flow separation is too large. The separated flow tends to increase not only losses but also engine noise.

Typically, the strut is cambered or staggered in the direction favorable to de-swirl the flow at the design point. At design point, an at-design flow F3 meets the airfoil 34 at an at-design angle of attack A1 whereas, at off-design, an off-design flow F4 meets the airfoil 34 at an off-design angle of attack A2. As shown, the at-design flow F3 and the off-design flow F4 are located on opposite sides of the central axis 11. Therefore, at off-design conditions, the pressure side becomes defined by the suction side 40 whereas the suction side becomes defined by the pressure side 39. The roles of the different sides of the airfoil 34 are reversed when the flow is at the off-design point. This may create large flow separations adjacent the pressure side 39 (which in this off-design point corresponds to the suction side). Thus, a significant compromise at the design point may be required to achieve acceptable engine performance through the mission.

The strut 33 of the present disclosure may at least partially alleviate these drawbacks. As shown in Fig. 3, the strut 33 includes a slot 41 that extends from the suction side 40 to the pressure side 39. The slot 41 has a slot inlet 42 on the suction side 40 and a slot outlet 43 on the pressure side 39. In other words, the slot 41 is defined through the airfoil downstream of the leading edge 37 and extends from the slot inlet 42 on the suction side 40 to the slot outlet 43 on the pressure side 39. The slot 41 defines a fluid flow passage for directing fluid flow from the suction side 40 to the pressure side 39 through the airfoil 34. The slot inlet 42 may be located closer to the leading edge 37 than the slot outlet 43. The slot 41 extends along a slot axis 44 from the slot inlet 42 to the slot outlet 43. The slot axis 44 extends in a direction having a component parallel to the flow F3, F4. The slot 41 may merge into the pressure side 39, which is herein the concave side. In other words, a slot angle A3 defined between an exit flow axis of the slot 41, which is defined by the slot axis 44 at the slot outlet 43 of the slot 41, and the pressure side 39 at the slot outlet 43 may be at most about 15 degrees. As shown in Fig. 3, a flow circulating area of the slot 41 decreases from the slot inlet 42 to the slot outlet 43. In other words, walls bounding the slot 41 may merge toward one another from the slot inlet 42 at the suction side 40 to the slot outlet 43 at the pressure side 39.

The slot inlet 42 may be located at at most about 40% of the chord C from the leading edge 37. The slot 41 may extend along the span S from about 20% of the span S from the inner end 36 to about 80% of the span S from the inner end 36. The slot 41 may extend along a greater or lesser portion of the span S in other embodiments. Extremities of the strut 33 may be free of the slot 41 for structural integrity of the strut 33.

The slot 41 describe herein may allow a strut airfoil to be optimized for its design point yet providing adequate performance in off-design conditions. The slot 41 may allow an airfoil that is cambered or staggered for the design point to perform with minimal loss at off design conditions. At off-design conditions the slot 41 may bring high energy flow from the suction side 40 of the airfoil, which acts as the pressure side at off-design condition, to energize and attach the separated flow at the pressure side 39, which acts as the suction side at off-design conditions. The slot 41 may be designed such that there will be no or minimal flow flowing through the slot 41 from pressure side to suction side at the design point.

The converging flow circulating area of the slot 41 may maximize the flow momentum. Moreover, the slot 41 may be designed such the flow angle at the slot outlet 43 would have a flow angle less than 15 degrees. This may increase the effectiveness of high-momentum flow and force separated low-momentum flow to reattach.

It was observed that the disclosed slot 41 has minimal impact at design point and there is no flow going from pressure side to suction side. At off-design point the slot 41 may energize the separated flow and may minimize the flow separation. It was further observed that the separated flow is minimized with the slot 41 at takeoff condition. In the present embodiment, the slot 41 does not have a significant adverse impact at the design point

Any airfoil of the gas turbine engine 10 may use such a slot 41 as disclosed herein. This airfoil may be part of a stator or a rotor; the stator or rotor may be part of the compressor section 14 of the turbine section 18 without departing from the scope of the present disclosure.

In the context of the present disclosure, the expression "about" includes variations of plus or minus 10%.

The embodiments described in this document provide non-limiting examples of possible implementations of the present technology. Upon review of the present disclosure, a person of ordinary skill in the art will recognize that changes may be made to the embodiments described herein without departing from the scope of the appended claims.

## Claims

1. An airfoil (34) for an aircraft engine, comprising:
a first side (39) extending along a span from an inner end (36) to an outer end (35) and along a chord from a leading edge (37) to a trailing edge (38), the first side (39) being concave;
a second side (40) extending along the span from the inner end (36) to the outer end (35) and along the chord from the leading edge (37) to the trailing edge (38), the second side (40) being convex; and
a slot (41) downstream of the leading edge (37), the slot (41) extending from a slot inlet (42) on the second side (40) to a slot outlet (43) on the first side (39), the slot (41) defining a fluid flow passage for directing fluid flow from the second side (40) to the first side (39) through the airfoil (34) when flow meets the airfoil at an off-design angle of attack (A2) in which the first side (39) corresponds to a suction side and the second side (40) corresponds to a pressure side, **characterised in that**
a flow circulating area of the slot (41) decreases from the slot inlet (42) to the slot outlet (43).

2. A turbine exhaust case (TEC) (30) for a gas turbine engine (10), comprising:
an inner case (32) extending circumferentially about a central axis (11);
an outer case (31) disposed radially outward from the inner case (32) and extending circumferentially about the central axis (11); and
struts (33) extending between the inner case (32) and the outer case (31), a strut of the struts (33) having the airfoil (34) of claim 1.

3. A stator for a gas turbine engine (10), comprising:
an inner case (32) extending circumferentially about a central axis (11);
an outer case (31) disposed around the inner case (32) and extending circumferentially about the central axis (11); and
struts (33) extending from the inner case (32) to the outer case (31), a strut of the struts (33) having the airfoil (34) of claim 1.

4. The TEC (30) or stator of claim 2 or 3, wherein the struts (33) are deswirling struts.

5. The TEC (30) or stator of any of claims 2 to 4, wherein the slot (41) extends from 18% to 22% of the span from the inner end (36) to 72% to 88% of the span from the inner end (36).

6. The airfoil (34), TEC (30) or stator of any preceding claim, wherein the slot inlet (42) is closer to the leading edge (37) than the slot outlet (43).

7. The airfoil (34), TEC (30) or stator of any of claims 1 to 5, wherein the slot (41) merges to the first side (39).

8. The airfoil (34), TEC (30) or stator of any preceding claim, wherein the slot inlet (42) is located at at most 40% of the chord from the leading edge (37).

9. The airfoil (34), TEC (30) or stator of any preceding claim, wherein a slot angle (A3) defined between an exit flow axis (44) of the slot (41) at the slot outlet (43) is at most 16.5 degrees relative to the first side (39).

## Patentansprüche

1. Schaufel (34) für ein Luftfahrzeugtriebwerk, umfassend:
eine erste Seite (39), die sich entlang einer Spanne von einem inneren Ende (36) zu einem äußeren Ende (35) und entlang einer Sehne von einer Vorderkante (37) zu einer Hinterkante (38) erstreckt, wobei die erste Seite (39) konkav ist;
eine zweite Seite (40), die sich entlang der Spanne von dem inneren Ende (36) zu dem äußeren Ende (35) und entlang der Sehne von der Vorderkante (37) zu der Hinterkante (38) erstreckt, wobei die zweite Seite (40) konvex ist; und
einen Schlitz (41) stromabwärts der Vorderkante (37), wobei sich der Schlitz (41) von einem Schlitzeinlass (42) auf der zweiten Seite (40) zu einem Schlitzauslass (43) auf der ersten Seite (39) erstreckt, wobei der Schlitz (41) einen Fluidströmungsdurchgang definiert, um Fluidstrom von der zweiten Seite (40) zu der ersten Seite (39) durch die Schaufel (34) zu leiten, wenn eine Strömung unter einem nichtauslegungsgemäßen Anstellwinkel (A2) auf die Schaufel trifft, bei dem die erste Seite (39) einer Saugseite entspricht und die zweite Seite (40) einer Druckseite entspricht,
**dadurch gekennzeichnet, dass**
eine Strömungsfläche des Schlitzes (41) von dem Schlitzeinlass (42) zu dem Schlitzauslass (43) abnimmt.

2. Turbinenabgasgehäuse (TEC) (30) für ein Gasturbinentriebwerk (10), umfassend:
ein Innengehäuse (32), das sich in Umfangsrichtung um eine Mittelachse (11) erstreckt;
ein Außengehäuse (31), das radial auswärts von dem Innengehäuse (32) angeordnet ist und sich in Umfangsrichtung um die Mittelachse (11) erstreckt; und
Streben (33), die sich zwischen dem Innengehäuse (32) und dem Außengehäuse (31) erstrecken, wobei eine Strebe der Streben (33) die Schaufel (34) nach Anspruch 1 aufweist.

3. Stator für ein Gasturbinentriebwerk (10), umfassend:
ein Innengehäuse (32), das sich in Umfangsrichtung um eine Mittelachse (11) erstreckt;
ein Außengehäuse (31), das um das Innengehäuse (32) herum angeordnet ist und sich in Umfangsrichtung um die Mittelachse (11) erstreckt; und
Streben (33), die sich von dem Innengehäuse (32) zu dem Außengehäuse (31) erstrecken, wobei eine Strebe der Streben (33) die Schaufel (34) nach Anspruch 1 aufweist.

4. TEC (30) oder Stator nach Anspruch 2 oder 3, wobei die Streben (33) Entdrallstreben sind.

5. TEC (30) oder Stator nach einem der Ansprüche 2 bis 4, wobei sich der Schlitz (41) von 18 % bis 22 % der Spanne von dem inneren Ende (36) bis 72 % bis 88 % der Spanne von dem inneren Ende (36) erstreckt.

6. Schaufel (34), TEC (30) oder Stator nach einem der vorhergehenden Ansprüche, wobei der Schlitzeinlass (42) näher an der Vorderkante (37) ist als der Schlitzauslass (43).

7. Schaufel (34), TEC (30) oder Stator nach einem der Ansprüche 1 bis 5, wobei der Schlitz (41) in die erste Seite (39) übergeht.

8. Schaufel (34), TEC (30) oder Stator nach einem der vorhergehenden Ansprüche, wobei der Schlitzeinlass (42) bei höchstens 40 % der Sehne von der Vorderkante (37) angeordnet ist.

9. Schaufel (34), TEC (30) oder Stator nach einem der vorhergehenden Ansprüche, wobei ein Schlitzwinkel (A3), der zwischen einer Austrittsströmungsachse (44) des Schlitzes (41) an dem Schlitzauslass (43) definiert ist, höchstens 16,5 Grad relativ zu der ersten Seite (39) beträgt.

## Revendications

1. Aube (34) pour un moteur d'aéronef, comprenant :
un premier côté (39) s'étendant le long d'une portée d'une extrémité intérieure (36) à une extrémité extérieure (35) et le long d'une corde d'un bord d'attaque (37) à un bord de fuite (38), le premier côté (39) étant concave ;
un second côté (40) s'étendant le long de la portée de l'extrémité intérieure (36) à l'extrémité extérieure (35) et le long de la corde du bord d'attaque (37) au bord de fuite (38), le second côté (40) étant convexe ; et
une fente (41) en aval du bord d'attaque (37), la fente (41) s'étendant d'une entrée de fente (42) sur le second côté (40) à une sortie de fente (43) sur le premier côté (39), la fente (41) définissant un passage d'écoulement de fluide pour diriger l'écoulement de fluide du second côté (40) vers le premier côté (39) à travers l'aube (34) lorsque l'écoulement rencontre l'aube selon un angle d'attaque hors conception (A2) dans lequel le premier côté (39) correspond à un côté aspiration et le second côté (40) correspond à un côté pression,
**caractérisée en ce que**
une zone de circulation d'écoulement de la fente (41) diminue de l'entrée de fente (42) à la sortie de fente (43).

2. Carter d'échappement de turbine (TEC) (30) pour un moteur à turbine à gaz (10), comprenant :
un carter intérieur (32) s'étendant circonférentiellement autour d'un axe central (11) ;
un carter extérieur (31) disposé radialement vers l'extérieur à partir du carter intérieur (32) et s'étendant circonférentiellement autour de l'axe central (11) ; et
des entretoises (33) s'étendant entre le carter intérieur (32) et le carter extérieur (31), une entretoise des entretoises (33) présentant l'aube (34) selon la revendication 1.

3. Stator pour moteur à turbine à gaz (10), comprenant :
un carter intérieur (32) s'étendant circonférentiellement autour d'un axe central (11) ;
un carter extérieur (31) disposé autour du carter intérieur (32) et s'étendant circonférentiellement autour de l'axe central (11) ; et
des entretoises (33) s'étendant du carter intérieur (32) au carter extérieur (31), une entretoise des entretoises (33) présentant l'aube (34) selon la revendication 1.

4. TEC (30) ou stator selon la revendication 2 ou la revendication 3, dans lequel les entretoises (33) sont des entretoises de détourbillonnement.

5. TEC (30) ou stator selon l'une quelconque des revendications 2 à 4, dans lequel la fente (41) s'étend de 18 % à 22 % de la portée à partir de l'extrémité intérieure (36) à 72 % à 88 % de la portée à partir de l'extrémité intérieure (36).

6. Aube (34), TEC (30) ou stator selon une quelconque revendication précédente, dans lequel l'entrée de fente (42) est plus proche du bord d'attaque (37) que la sortie de fente (43).

7. Aube (34), TEC (30) ou stator selon l'une quelconque des revendications 1 à 5, dans lequel la fente (41) fusionne avec le premier côté (39).

8. Aube (34), TEC (30) ou stator selon une quelconque revendication précédente, dans lequel l'entrée de fente (42) est située à au plus 40 % de la corde à partir du bord d'attaque (37).

9. Aube (34), TEC (30) ou stator selon une quelconque revendication précédente, dans lequel un angle de fente (A3) défini entre un axe d'écoulement de sortie (44) de la fente (41) au niveau de la sortie de fente (43) et le premier côté (39) est au plus de 16,5 degrés.
